# EUROPEAN PATENT APPLICATION

(11) **EP 4 776 344 A1**
(43) Date of publication of application: **15.07.2026**
(21) Application number: 24821239.1
(22) Date of filing: 12.11.2024
(51) Int. Cl.: H01M 4/58

(54) **LITHIUM IRON PHOSPHATE MATERIAL AND PREPARATION METHOD THEREFOR, AND POSITIVE ELECTRODE SHEET AND SECONDARY BATTERY**

(30) Priority: 06.11.2024 CN 202411580621
(71) Applicant: Hubei Wanrun New Energy Technology Co., Ltd., Shiyan, Hubei 442500 (CN)
(72) Inventor: WANG, Qin, Shiyan, Hubei 442500 (CN); LV, Fei, Shiyan, Hubei 442500 (CN); WANG, Wei, Shiyan, Hubei 442500 (CN); ZHENG, Ligen, Shiyan, Hubei 442500 (CN)
(74) Representative: Manitz Finsterwald Patent- und Rechtsanwaltspartnerschaft mbB
(86) International application number: PCT/CN2024/131529
(87) International publication number: WO 2026/097594

(57) **Abstract**

The disclosure provides a lithium iron phosphate material and a preparation method thereof, a cathode plate, and a secondary battery, belonging to the technical field of battery materials. The lithium iron phosphate material includes a core represented by a molecular formula of LiₐFe(PO₄)_{b}(BO₃)_{c}, where 1.02≤a≤1.05, 0.98≤b≤1.08, 0.01≤c≤0.02, wherein a proportion of numbers of particles with a primary particle size ranging from 100 nm to 600 nm is greater than or equal to 93.5%. The lithium iron phosphate material provided in the present application has a concentrated primary particle size range, and the number of particles with a primary particle size in the range of 100 nm to 600 nm is greater than or equal to 93.5%, which results in good consistency in the discharge process, avoiding the issues of low energy efficiency caused by large particles and poor cycling performance caused by small particles, thereby ensuring that the battery has the advantages of high energy efficiency and good cycling performance.

## Description

### TECHNICAL FIELD

The present application relates to the technical field of battery materials, in particular to a lithium iron phosphate material and a preparation method thereof, a cathode plate, and a secondary battery.

### BACKGROUND

Lithium iron phosphate (LFP), represented by a molecular formula of LiFePO₄, is an off-white solid insoluble in water, which usually appears black since it is coated with carbon. Lithium iron phosphate is a safe cathode material for the lithium-ion battery, due to wide source of raw materials, relatively low price, no pollution to the environment, free of any heavy metal elements harmful to human body, difficulty in precipitation of oxygen in its olivine structure, and good stability. Therefore, Lithium iron phosphate has been extensively studied and developed rapidly.

When lithium iron phosphate is used as the cathode material for batteries such as batteries used in the field of new energy vehicles, the uniformity of particle size of the lithium iron phosphate material is very important. However, the lithium iron phosphate material prepared by the conventional solid-phase method has extremely unevenly distributed primary particle size, resulting in inconsistency in the discharge process when it is used as the cathode material, and thus causing low energy efficiency and poor cycling performance of the battery.

### SUMMARY

In view of the technical issue existing in the background, the present application provides a lithium iron phosphate material, and a preparation method and use thereof, aiming to address the technical issue that the lithium iron phosphate material prepared by the solid-phase method in the conventional technology has uneven primary particle size distribution.

In a first aspect, an embodiment of the present application provides a lithium iron phosphate material. The lithium iron phosphate material includes a core represented by a molecular formula of LiₐFe(PO₄)_{b}(BO₃)_{c}, where 1.02≤a≤1.05, 0.98≤b≤1.08, 0.01≤c≤0.02. A proportion of numbers of particles with a primary particle size ranging from 100 nm to 600 nm is greater than or equal to 93.5%.

In the technical solution of the embodiment of the present application, the provided lithium iron phosphate material has a concentrated primary particle size range, and the proportion of numbers of particles with the primary particle size ranging from 100 nm to 600 nm is greater than or equal to 93.5%, which results in good consistency in the discharge process, avoiding the issues of low energy efficiency caused by large particles and poor cycling performance caused by small particles, thereby ensuring that the battery has the advantages of high energy efficiency and good cycling performance.

In some embodiments, a span of primary particles of the lithium iron phosphate material is in a range from 0.5 to 2.5, and a particle size D50 of the primary particles is in a range from 140 nm to 320 nm. The lithium iron phosphate material has a compaction density of 2.20 g/mL to 2.60 g/mL, a BET specific surface area of 8.0 m²/g to 15.0 m²/g, and a powder resistivity of 5.00 Ω·cm to 22.00 Ω·cm.

In the embodiments, the primary particle size of the lithium iron phosphate material not only has a uniform distribution, but also is relatively small, so that the internal arrangement of the lithium iron phosphate material is more uniform, which helps to form a balanced voltage platform and thus keeps the battery in a stable state during operation.

Meanwhile, by controlling the compaction density, the BET specific surface area, and the powder resistivity of the lithium iron phosphate material within the above ranges, it is not only beneficial for the lithium iron phosphate material to have good electronic conductivity and a relatively high energy density, but also beneficial to controlling the contact area between the lithium iron phosphate material and the electrolyte, reducing the side reactions between the lithium iron phosphate material and the electrolyte, which is conducive to improving specific capacity, discharge energy efficiency, and cycling performance of the battery.

In some embodiments, the lithium iron phosphate material further includes a coating layer coated on a surface of the core, wherein a material of the coating layer includes a carbon material, and a mass percentage of the carbon material in the lithium iron phosphate material is in a range from 1.10% to 2.00%.

In the embodiments, by controlling the mass percentage of the carbon material of the coating layer in the lithium iron phosphate material within the above range, the electronic conductivity of the lithium iron phosphate material is effectively improved.

In a second aspect, an embodiment of the present application provides a method for preparing a lithium iron phosphate material, including the following steps:
mixing a ferrous source, an oxalate ion source, a borate ion source and a first regulator in a reaction solution, obtaining a mixture through a first treatment;
subjecting the mixture to solid-liquid separation and a first slurrying process to obtain a first slurry;
mixing the first slurry, a first lithium source, a first phosphorus source and a second regulator, followed by a first grinding process and a first drying process to obtain a first dried material;
mixing a ferric source, a second phosphorus source, a second lithium source and a carbon source, followed by a second slurrying process, a second grinding process, and a second drying process to obtain a second dried material; and
mixing and then calcining the first dried material and the second dried material to obtain the lithium iron phosphate material.

In the technical solution of the embodiment of the present application, firstly, raw materials such as the ferrous source, the oxalate ion source, the borate ion source, the first lithium source, and the second phosphorus source are subjected to the stirring reaction, the solid-liquid separation, the first slurrying process, the first grinding process, and the first drying process to obtain the first dried material with a relatively low reaction temperature required to form lithium iron phosphate. Further, raw materials such as the ferric source, the second phosphorus source, the second lithium source, and the carbon source are subjected to the second slurrying process, the second grinding process, and the second drying process to obtain the second dried material with a relatively high reaction temperature required to form lithium iron phosphate. The first dried material and the second dried material with different reaction temperatures are mixed and then calcined. The first dried material is first crystallized to form crystal nuclei, and the second dried material preferentially nucleates heterogeneously on the crystal nuclei formed by the first dried material and continues to grow, so as to realize step-by-step nucleation and growth, avoiding the issue of extremely uneven distribution of the primary particle size due to disordered growth and instantaneous rapid nucleation of lithium iron phosphate crystal nuclei, thereby obtaining the lithium iron phosphate material with uniform primary particle size distribution and highly concentrated primary particle size.

In some embodiments, the step of mixing the ferrous source, the oxalate ion source, the borate ion source and the first regulator in the reaction solution, obtaining the mixture through the first treatment includes:
mixing the ferrous source, the oxalate ion source, the borate ion source and the first regulator in the reaction solution, obtaining the mixture through treatment at a first temperature for a first treatment time;
wherein a pH value of the reaction solution is in a range from 4 to 5.5, the first temperature is in a range from 35°C to 55°C, and the first treatment time is in a range from 60 min to 120 min.

In the embodiments, by adjusting the pH value, the temperature and the treatment time in the first treatment process, the generation of ferrous oxalate can be promoted, avoiding the generation of ferric products during the reaction. The ferrous oxalate material has a low decomposition temperature, of which iron is bivalent iron, and does not require to be reduced by carbon under a high temperature condition. Therefore, the ferrous oxalate as a raw material can reduce the reaction temperature for forming lithium iron phosphate, and the crystal nuclei are thus first formed at a relatively low calcination temperature, which is beneficial for the second dried material to subsequently nucleate heterogeneously on the formed crystal nuclei and continue to grow, so as to realize step-by-step nucleation and growth, avoiding the issue of extremely uneven distribution of the primary particle size due to disordered growth and instantaneous rapid nucleation of crystal nuclei of lithium iron phosphate, thereby obtaining the lithium iron phosphate material with uniform primary particle size distribution and highly concentrated primary particle size.

In some embodiments, a ratio of amounts of substance of iron, oxalate, and borate in the mixture is 1:(0.8 to 1):(0.1 to 0.2); a ratio of amounts of substance of iron in the first slurry, lithium in the first lithium source, phosphorus in the first phosphorus source, and the second regulator is 1:(1.04 to 1.1):(1.04 to 1.1):(0.15 to 0.2); a ratio of amounts of substance of iron in the ferric source, phosphorus in the second phosphorus source, lithium in the second lithium source, and carbon in the carbon source is 1:1:(1.02 to 1.04):(1.2 to 1.8); and a ratio of amounts of substance of lithium in the first lithium source to lithium in the second lithium source is 1:(8 to 9).

In the embodiments, by controlling the ratio of amounts of substance of the raw materials used in each step within the above ranges, the uniformity of the primary particle size distribution of the lithium iron phosphate material can be further improved, which greatly reduces the powder resistivity while increasing the compaction density and tapped density, thereby exhibiting the advantages of high specific capacity, good rate performance, high discharge energy efficiency, and excellent cycling performance.

In some embodiments, the ferrous source is at least one selected from ferrous sulfate, ferrous chloride, and ferrous acetate. The oxalate ion source includes at least one of oxalic acid, ammonium oxalate, and sodium oxalate. The borate ion source includes at least one of boric acid, ammonium borate, and sodium borate. The first regulator includes at least one of ammonium bicarbonate, and sodium bicarbonate. The first phosphorus source is at least one of selected from phosphoric acid, diammonium hydrogen phosphate, and ammonium dihydrogen phosphate. The first lithium source is at least one of selected from lithium oxalate, and lithium acetate. The second regulator includes at least one of polyethylene glycol, polyvinyl alcohol, polyvinylpyrrolidone, and a polycarboxylic acid compound. The ferric source includes ferric phosphate. The second phosphorus source includes ferric phosphate. The second lithium source includes lithium carbonate. The carbon source is at least one selected from glucose, sucrose, starch, and cellulose.

In the embodiments, appropriate ferrous source, oxalate ion source, borate ion source, first phosphorus source, and first lithium source are used, which ensures that the prepared first dried material has a relatively low reaction temperature, and the lithium iron phosphate material can be doped with anions to improve the electrochemical performance; and appropriate ferric source, second phosphorus source, second lithium source, and carbon source are used, which ensures that the prepared second dried material has a relatively high reaction temperature, and the lithium iron phosphate material can be coated with carbon to improve the electronic conductivity.

In some embodiments, the step of mixing and then calcining the first dried material and the second dried material to obtain the lithium iron phosphate material includes:
mixing and then pulverizing the first dried material and the second dried material to obtain a pulverized material; and in a first protective atmosphere, subjecting the pulverized material to treatments at a second temperature for a second treatment time and then at a third temperature for a third treatment time, to obtain the lithium iron phosphate material;
wherein a particle size D50 of the first dried material is in a range from 2 µm to 5 µm, a particle size D50 of the second dried material is in a range from 5 µm to 15 µm, a particle size D50 of the pulverized material is in a range from 0.5 µm to 1 µm, the second temperature is in a range from 350°C to 450°C, the second treatment time is in a range from 2 h to 3 h, the third temperature is in a range from 600°C to 700°C, and the third treatment time is in a range from 3 h to 6 h.

In the embodiments, the nucleation is induced by the step-by-step calcination method to realize step-by-step nucleation and growth. Specifically, the first dried material requires a relatively low reaction temperature to form lithium iron phosphate, and can be fully crystallized and forms crystal nuclei by calcination at 350°C to 450°C. The second dried material requires a relatively high reaction temperature to form lithium iron phosphate and forms the lithium iron phosphate by reaction at 600°C to 700°C, which preferentially nucleates heterogeneously on the crystal nuclei formed by the first dried material and continues to grow. Further, by controlling the particle sizes of the first dried material, the second dried material, and the pulverized material within the above ranges, the growth rate of the lithium iron phosphate crystal nuclei can be controlled, improving the uniformity of the primary particle size of the lithium iron phosphate material. Therefore, the growth of the crystal nuclei can be controlled by the step-by-step calcination method, which avoids the issue of unconcentrated distribution of particles caused by instantaneous rapid nucleation, obtaining the lithium iron phosphate material with uniform primary particle size distribution and more concentrated primary particle size.

In a third aspect, an embodiment of the present application provides a cathode plate. The cathode plate includes a current collector and a cathode material disposed on at least one surface of the current collector in a thickness direction thereof, the cathode material includes the lithium iron phosphate material as described above or the lithium iron phosphate material prepared by the method as described above.

In the embodiment, the cathode plate and the cathode material contain the above-described lithium iron phosphate material, thereby having the advantages of improving energy efficiency and cycling performance of the battery.

In a fourth aspect, an embodiment of the present application provides a secondary battery. The secondary battery includes the cathode plate as described above, an anode plate, and a separator disposed between the cathode plate and the anode plate.

In the embodiment, the secondary battery contains the cathode plate as described above, thereby having the advantages of excellent cycling performance and high energy efficiency.

The above description only summarizes the technical solutions of the present application. In order to more clearly understand the technical means of the present application for implementation according to the contents of the specification, as well as to make the above and other objectives, technical features, and advantages of the present application clearer and more understandable, specific embodiments of the present disclosure are described below.

### BRIEF DESCRIPTION OF THE DRAWINGS

To illustrate the technical solutions of the present application more clearly, the drawings used in the present application will be briefly described below. Apparently, the drawings described below are merely for some embodiments of the present application. For those of ordinary skill in the art, other drawings can be obtained according to the disclosed drawings without any creative effort.
FIG. 1 shows a schematic flow chart of a method for preparing a lithium iron phosphate material according to an embodiment of the present application.
FIG. 2 shows a first morphology image of a lithium iron phosphate material prepared in Example 1 of the present application.
FIG. 3 shows a second morphology image of the lithium iron phosphate material prepared in Example 1 of the present application.
FIG. 4 is a morphology image of a lithium iron phosphate material prepared in Comparative Example 1 of the present application.

### DETAILED DESCRIPTION

Embodiments of technical solutions of the present application will now be described in detail with reference to the accompanying drawings. The following embodiments are only for illustrating the technical solutions of the present application more clearly, therefore only used as examples, but they should not be construed as limiting the protection scope of the present application.

Unless otherwise defined, all technical and scientific terms used herein have the same meaning as commonly understood by those of ordinary skill in the art to which the present application pertains. The terms used in the present application herein are for the purpose of describing embodiments only and are not intended to limit the present application. The terms "include" and "have" and any variations thereof in the specification and claims as well as the above description of drawings of the present application are intended to cover non-exclusive inclusions.

In the description of the embodiments of the present application, the technical terms "first", "second", etc. are only used to distinguish different objects and cannot be understood as indicating or implying relative importance or implicitly indicating the quantity, particular order, or primary and secondary relationship of the indicated technical features. In the description of embodiments of the present application, the "plurality" means two or more than two, unless otherwise specifically defined.

When "embodiment" is mentioned herein, it means that a particular feature, structure, or characteristic described based on the embodiment can be included in at least one embodiment of the present application. When appeared in various places in the specification, the phrase does not necessarily indicate the same embodiment, nor be a separate or alternative embodiment mutually exclusive of other embodiments. It is explicitly and implicitly understood by those skilled in the art that the embodiment described herein can be combined with other embodiments.

In the description of the embodiments of the present application, the term "and/or" only describes the association relationship of associated objects, indicating that there can be three relationships. For example, A and/or B may indicate three conditions: A alone, both A and B, and B alone. In addition, the character "/" herein generally indicates that the relationship between the former and latter objects is an "or" relationship.

In the description of the embodiments of the present application, the term "plurality" refers to at least two (including two). Similarly, "a plurality of groups" refers to at least two groups (including two groups), and "a plurality of pieces" refers to at least two pieces (including two pieces).

In the description of the embodiments of the present application, the solvent in the "solution" or "reaction solution" or "water" is at least one of distilled water, deionized water, pure water, and ultrapure water, unless otherwise specified.

### Terms

Unless otherwise stated or there is a contradiction, terms or phrases used in the present application have the following meanings.

Particle size: For spherical particles, the particle size refers to the diameter of the spherical particles. For non-spherical particles, the particle size usually refers to an equivalent particle size of the non-spherical particles (generally referred to as a particle size). The equivalent particle size of the particles can be measured by a scanning electron microscope (SEM) or a laser particle size tester. The equivalent particle size means that when a certain physical property of a particle was the same as or similar to that of a homogeneous spherical particle, the diameter of the spherical particle is used to represent the diameter of the actual particle. Unless otherwise stated or there is a contradiction, the particle size in the present application represents an equivalent particle size.

Primary particle size: Also known as original particle size, the primary particle size refers to the particle size of a single particle, reflecting the intrinsic size of the particle when no interaction occurs in the initial stage of formation.

Secondary particle size: It refers to the particle size of aggregates formed by interactions between particles such as agglomeration and condensation. The secondary particle size is usually larger than the primary particle size and has a wider distribution range.

Particle size distribution parameter: In the particle size distribution curve of particles, the particle size corresponding to the cumulative particle size distribution percentage reaching N% is called DN particle size, which means that the proportion of particles smaller than this particle size in all particles reaches N%, where N=0-100. When N=100, D100 particle size is the particle size corresponding to the cumulative particle size distribution percentage reaching 100%. When N=50, the particle size D50 is the particle size corresponding to the cumulative particle size distribution percentage reaching 50%, indicating the median particle size or the median diameter, and indicating that the particles smaller than and larger than this particle size each account for 50%. For example, particle size D50=1 mm, which means that particles having a particle size smaller than 1 mm and particles having a particle size larger than 1 mm each account for 50% of all particles. The DN particle size can be measured by a laser particle size tester.

Span: Also known as span, it is calculated by a formula of Span=(D90-D10)÷D50. The smaller the span, the more concentrated the particle size distribution of the particles. The larger the span, the greater the particle size difference of the particles, and the more dispersed the distribution of the particles.

In the conventional technology, the lithium iron phosphate material is prepared by the solid-phase method, all lithium iron phosphate crystallizes simultaneously due to lack of the condition of heterogeneous nucleation in the calcination process, producing a large number of lithium iron phosphate crystal nuclei in the same time period, resulting in uncontrollable growth rate of the crystal nuclei, and leading to extremely uneven distribution of the primary particle size of the lithium iron phosphate material.

The uneven primary particle size of the lithium iron phosphate material causes the inconsistency in the discharge process. Specifically, large particles discharge slowly, especially the large particles with a primary particle size exceeding 1 µm, which leads to a large degree of polarization of a material and causes a very fast voltage drop in the discharge process, thus resulting in low energy efficiency. Though small particles discharge quickly, the particles with too small size have too large specific surface area and are more likely to generate a side reaction with trace amounts of acid or other substances decomposed from the electrolyte, which causes damage and erosion to the structure of a material, so that the attenuation is fast in the early stage of the cycling process and the cycling performance is deteriorated significantly.

For the energy-storage type lithium iron phosphate material, after being applied to the battery, the cycling performance is required to reach more than 10,000 times or even 12,000 times, and the energy efficiency is required to reach 94% or even more than 95% under discharge at a constant power of 0.5 P. However, the lithium iron phosphate material prepared by the conventional solid-phase synthesis method has extremely uneven primary particle size distribution, which causes poor consistency in the discharge process, resulting in low energy efficiency of the battery and cycling performance deterioration.

In order to address the issue that the lithium iron phosphate material prepared by the solid-phase method in the conventional technology has extremely uneven primary particle size distribution, the present application provides a lithium iron phosphate material and a preparation method thereof, a cathode plate, and a secondary battery. The lithium iron phosphate material provided by the present application has primary particle size distribution with good uniformity and high concentration, and exhibits good consistency in the discharge process. The present lithium iron phosphate material prepared by the solid-phase synthesis method achieves step-by-step nucleation and growth through the induced nucleation technology based on different reaction temperatures for the first dried material and the second dried material, which effectively controls the growth rate of crystal nuclei and enables the lithium iron phosphate material to have more concentrated primary particle size distribution, so that the energy efficiency and cycling performance of the cathode plate and secondary battery containing the lithium iron phosphate material can be effectively improved.

In a first aspect, an embodiment of the present application provides a lithium iron phosphate material. The lithium iron phosphate material includes a core represented by a molecular formula of LiₐFe(PO₄)_{b}(BO₃)_{c}, where 1.02≤a≤1.05, 0.98≤b≤1.08, 0.01≤c≤0.02. A proportion of numbers of particles with a primary particle size ranging from 100 nm to 600 nm is greater than or equal to 93.5%.

In the technical solution of the embodiment of the present application, the provided lithium iron phosphate material has a concentrated primary particle size range, in which the proportion of numbers of particles with the primary particle size ranging from 100 nm to 600 nm is greater than or equal to 93.5%, thereby causing good consistency in the discharge process, avoiding the issue of low energy efficiency due to large particles and poor cycling performance due to small particles, and ensuring that the battery has the advantages of high energy efficiency and good cycling performance.

In the embodiments, in the molecular formula of the core, a, b, and c each represent a stoichiometric proportion. Values of "a" include, but are not limited to, 1.02, 1.025, 1.03, 1.035, 1.04, 1.045, 1.05, etc.; values of "b" include, but are not limited to, 0.98, 0.99, 1.00, 1.01, 1.02, 1.03, 1.04, 1.05, 1.06, 1.07, 1.08, etc.; and values of "c" include, but are not limited to, 0.01, 0.012, 0.014, 0.016, 0.018, 0.02, etc.

In the embodiments, the proportion of numbers of particles with a primary particle size ranging from 100 nm to 600 nm in the lithium iron phosphate material is greater than or equal to 93.5%, including but being not limited to 93.5%, 94%, 94.5%, 95%, 95.5%, 96%, 96.5%, 97%, 97.5%, 98%, 98.5%, 99%, 99.5%, 100%, etc. Further, the proportion of numbers of particles with the primary particle size ranging from 100 nm to 600 nm in the lithium iron phosphate material is preferably in a range from 93.5% to 97.3%, and the primary particle size has a relatively high uniformity, ensuring that the lithium iron phosphate material has improved consistency in the discharge process. Furthermore, the proportion of numbers of particles with the primary particle size ranging from 100 nm to 600 nm in the lithium iron phosphate material is preferably in a range from 95.5% to 97.3%, and the primary particle size has further improved uniformity, so that the lithium iron phosphate material has very high consistency in the discharge process.

In some embodiments, a span of primary particles of the lithium iron phosphate material is in a range from 0.5 to 2.5.

In some embodiments, a particle size D50 of the primary particles of the lithium iron phosphate material is in a range from 140 nm to 320 nm.

When the lithium iron phosphate material satisfies the span range of the primary particles and/or the particle size D50 range of the primary particles, the primary particle size of the lithium iron phosphate material not only has a uniform distribution but also is relatively small, so that the internal arrangement of the lithium iron phosphate material is more uniform, which helps to form a balanced voltage platform and thus keeps the battery in a stable state during operation.

In some embodiments, the span of the primary particles of the lithium iron phosphate material includes, but is not limited to, 0.5, 0.6, 0.8, 1.0, 1.2, 1.4, 1.6, 1.8, 2, 2.2, 2.4, 2.5, etc. Further, the span of the primary particles of the lithium iron phosphate material is preferably in a range from 1.2 to 2.5, leading to more concentrated primary particle size distribution, so that the lithium iron phosphate material has an improved consistency in the discharge process, which is beneficial to improving the energy efficiency and cycling performance of the battery. Furthermore, the span of the primary particles of the lithium iron phosphate material is preferably in a range from 1.2 to 1.8, which enables to further improve the distribution concentration of the primary particle size, ensuring good consistency in the discharge process and relatively excellent electrical performances.

In some embodiments, the particle size D50 of the primary particles size of the lithium iron phosphate material includes, but is not limited to, 140 nm, 160 nm, 180 nm, 200 nm, 220 nm, 240 nm, 260 nm, 280 nm, 300 nm, 320 nm, etc. Further, the particle size D50 of the primary particles size of the lithium iron phosphate material is preferably in a range from 140 nm to 305 nm, with a small primary particle size, so that the close contact and uniform arrangement between the lithium iron phosphate material particles can be realized, thereby ensuring stable electrical performances. Furthermore, the particle size D50 of the primary particles size of the lithium iron phosphate material is preferably in a range from 160 nm to 235 nm, so that the primary particle size is relatively small and has relatively concentrated distribution, which is beneficial to further improving the electrical performances of the lithium iron phosphate material.

In some embodiments, the lithium iron phosphate material has a compaction density of 2.20 g/mL to 2.60 g/mL.

In some embodiments, the lithium iron phosphate material has a tapped density of 1.00 g/mL to 1.50 g/mL.

In some embodiments, the lithium iron phosphate material has a BET specific surface area of 8.0 m²/g to 15.0 m²/g.

In some embodiments, the lithium iron phosphate material has a powder resistivity of 5.00 Ω·cm to 22.00 Ω·cm.

When the lithium iron phosphate material satisfies the compaction density range, and/or the tapped density range, and/or the BET specific surface area range, and/or the powder resistivity range, the lithium iron phosphate material has not only good electronic conductivity but also good consistency in the discharge process. Moreover, the particles with different sizes in the lithium iron phosphate material have good compactness, which improves the electronic conductivity of the lithium iron phosphate material, and is conducive to improving the specific capacity, discharge energy efficiency and cycling performance of the battery.

In some embodiments, the compaction density of the lithium iron phosphate material includes, but is not limited to, 2.20 g/mL, 2.25 g/mL, 2.30 g/mL, 2.35 g/mL, 2.40 g/mL, 2.45 g/mL, 2.50 g/mL, 2.55 g/mL, 2.60 g/mL, etc. Further, the compaction density of the lithium iron phosphate material is preferably in a range from 2.25 g/mL to 2.55 g/mL, so that the particles of the lithium iron phosphate material have improved compactness, which can improve the charge specific capacity and discharge specific capacity, rate performance and energy density of the battery and is conducive to optimizing the cycle life of the battery. Furthermore, the compaction density of the lithium iron phosphate material is preferably in a range from 2.40 g/mL to 2.50 g/mL, so that the charge specific capacity and discharge specific capacity, rate performance, and cycling performance of the battery are more excellent.

In some embodiments, the tapped density of the lithium iron phosphate material is in a range from 1.00 g/mL to 1.50 g/mL, including but being not limited to, 1.00 g/mL, 1.05 g/mL, 1.10 g/mL, 1.15 g/mL, 1.20 g/mL, 1.25 g/mL, 1.30 g/mL, 1.35 g/mL, 1.40 g/mL, 1.45 g/mL, 1.50 g/mL, etc. Further, the tapped density of the lithium iron phosphate material is preferably in a range from 1.05 g/mL to 1.34 g/mL, so that the particles of the lithium iron phosphate material are in closer contact, which is beneficial to increasing energy density, improving rate performance and enhancing energy efficiency. Furthermore, the tapped density of the lithium iron phosphate material is preferably in a range from 1.20 g/mL to 1.32 g/mL, so that the charge specific capacity and discharge specific capacity, rate performance, and cycling performance of the battery are more excellent.

In some embodiments, the BET specific surface area of the lithium iron phosphate material is in a range from 8.0 m²/g to 15.0 m²/g, including but being not limited to, 8.0 m²/g, 9 m²/g, 10 m²/g, 11 m²/g, 12 m²/g, 13 m²/g, 14 m²/g, 15.0 m²/g, etc. Further, the BET specific surface area of the lithium iron phosphate material is preferably in a range from 8.01 m²/g to 14.1 m²/g, so that the lithium iron phosphate material has a relatively moderate specific surface area, which neither causes excessive gaps existing between particles due to too large specific surface area, thereby hindering the improvement of compaction density, nor causes excessive large particle size due to too small specific surface area, thereby affecting the intercalation or de-intercalation of lithium ions. Furthermore, the BET specific surface area of the lithium iron phosphate material is preferably in a range from 8.01 m²/g to 11.8 m²/g, so that the lithium iron phosphate material has a moderate specific surface area, further improving the compaction density while promoting the intercalation or de-intercalation of lithium ions.

In some embodiments, the powder resistivity of the lithium iron phosphate material is in a range from 5.00 Ω·cm to 22.00 Ω·cm, including but being not limited to, 5.00 Ω·cm, 6 Ω·cm, 8 Ω·cm, 10 Ω·cm, 12 Ω·cm, 14 Ω·cm, 16 Ω·cm, 18 Ω·cm, 20 Ω·cm, 22.00 Ω·cm, etc. Further, the powder resistivity of the lithium iron phosphate material is preferably in a range from 6.16 Ω·cm to 20.40 Ω·cm, and the relatively low powder resistivity can accelerate the electron transmission speed, improve the charge and discharge efficiencies of the battery and meet the demand for fast charging, and also can enhance the rate performance, prolong the cycle life and improve the safety of the battery. Furthermore, the powder resistivity of the lithium iron phosphate material is preferably in a range from 6.16 Ω·cm to 9.12 Ω·cm, which greatly improves the electrical conductivity of the material, thereby being beneficial to realizing more excellent electrical performances.

In some embodiments, the lithium iron phosphate material further includes a coating layer coated on a surface of the core, wherein a material of the coating layer includes a carbon material, and a mass percentage of the carbon material in the lithium iron phosphate material is in a range from 1.10% to 2.00%.

In the embodiments, the lithium iron phosphate material obtained by coating the core with carbon can improve the electrical contact between the lithium iron phosphate materials, thereby improving the electronic conductivity of the lithium iron phosphate material.

In some embodiments, the mass percentage of the carbon material in the lithium iron phosphate material, includes, but is not limited to, 1.10%, 1.20%, 1.30%, 1.40%, 1.50%, 1.60%, 1.70%, 1.80%, 1.90%, 2.00%, etc. Further, the mass percentage of the carbon material in the lithium iron phosphate material is preferably in a range from 1.45% to 1.98%. An appropriate amount of carbon material can form a perfect conductive network on the surface of the lithium iron phosphate material, significantly improving the electronic conductivity of the material, and facilitating to adjust the particle morphology and particle size distribution of the material, thereby improving the charge specific capacity and discharge specific capacity, rate performance and energy efficiency of the battery.

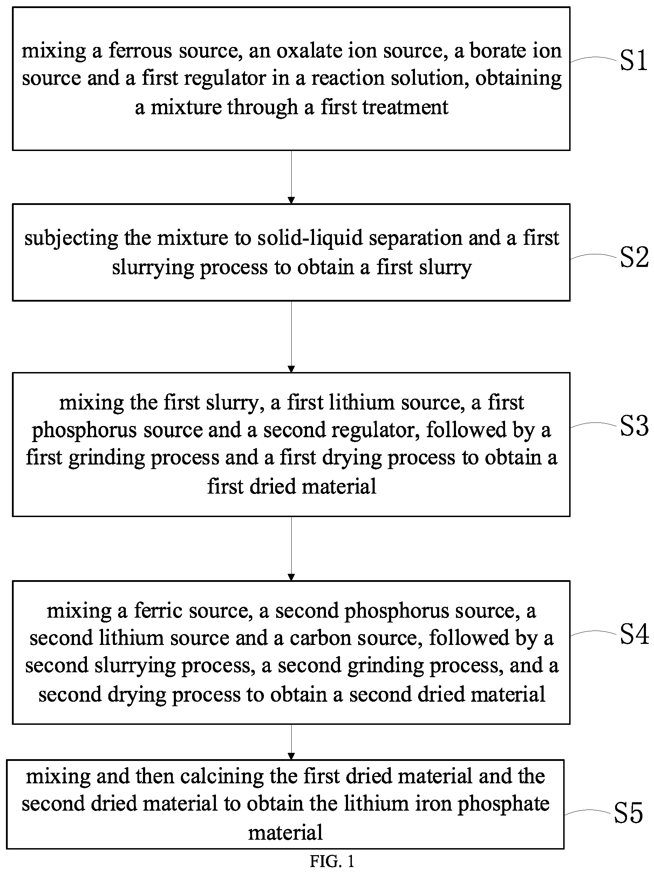

Please referring to FIG. 1, in a second aspect, an embodiment of the present application provides a method for preparing a lithium iron phosphate material, including the following steps:
S1: mixing a ferrous source, an oxalate ion source, a borate ion source, and a first regulator in a reaction solution, obtaining a mixture through a first treatment;
S2: subjecting the mixture to a solid-liquid separation and a first slurrying process to obtain a first slurry;
S3: mixing the first slurry, a first lithium source, a first phosphorus source, and a second regulator, followed by a first grinding process and a first drying process to obtain a first dried material;
S4: mixing a ferric source, a second phosphorus source, a second lithium source, and a carbon source, followed by a second slurrying process, a second grinding process, and a second drying process to obtain a second dried material; and
S5: mixing and then calcining the first dried material and the second dried material to obtain the lithium iron phosphate material.

In the technical solution of the embodiment of the present application, firstly, raw materials such as the ferrous source, the oxalate ion source, the borate ion source, the first lithium source, and the second phosphorus source are subjected to the stirring reaction, the solid-liquid separation, the first slurrying process, the first grinding process, and the first drying process to obtain the first dried material with a relatively low reaction temperature. Further, raw materials such as the ferric source, the second phosphorus source, the second lithium source, and the carbon source are subjected to the second slurrying process, the second grinding process, and the second drying process to obtain the second dried material with a relatively high reaction temperature. The first dried material and the second dried material with different reaction temperatures are mixed and then calcined. The first dried material is first crystallized to form crystal nuclei, and the second dried material preferentially nucleates heterogeneously on the crystal nuclei formed by the first dried material and continues to grow, so as to realize step-by-step nucleation and growth, avoiding the issue of extremely uneven primary particle size distribution due to disordered growth and instantaneous rapid nucleation of the lithium iron phosphate crystal nuclei, thereby obtaining the lithium iron phosphate material with uniform primary particle size distribution and highly concentrated primary particle size.

The method for preparing the lithium iron phosphate material is described in detail below by stepwise description.

S1: Mixing a ferrous source, an oxalate ion source, a borate ion source, and a first regulator in a reaction solution, obtaining a mixture through a first treatment.

In some embodiments, the step of mixing the ferrous source, the oxalate ion source, the borate ion source, and the first regulator in the reaction solution, obtaining the mixture through the first treatment includes:
mixing the ferrous source, the oxalate ion source, the borate ion source, and the first regulator in the reaction solution, obtaining the mixture through treatment at a first temperature for a first treatment time;
a pH value of the reaction solution is in a range from 4 to 5.5, the first temperature is in a range from 35°C to 55°C, and the first treatment time is in a range from 60 min to 120 min.

In the embodiments, by adjusting the pH value, the temperature, and the treatment time in the first treatment process, the generation of ferrous oxalate can be promoted, avoiding the generation of ferric products during the reaction. The ferrous oxalate material has a low decomposition temperature, of which iron is bivalent iron and does not require to be reduced by hot carbon at high temperature. Therefore, the ferrous oxalate as a raw material can reduce the reaction temperature for forming lithium iron phosphate, so as to fully crystallize and form crystal nuclei at a relatively low calcination temperature, which is conducive to the subsequent induced nucleation.

It can be understood that the first treatment time includes a first feeding time and a first stirring time. The first feeding time refers to a time period during which the ferrous source, the oxalate ion source, the borate ion source, and the first regulator are added to the reaction solution. The first stirring time refers to a time period of continuous stirring for reaction after the completion of feeding.

In some embodiments, the first feeding time and the first stirring time are each independently in a range from 30 min to 60 min, including but being not limited to 30 min to 60 min, 35 min, 40 min, 45 min, 50 min, 55 min, 60 min, etc.

In some embodiments, the reaction solution is an oxalic acid solution, and the pH value of the reaction solution is in a range from 4 to 5.5, including but being not limited to 4, 4.2, 4.4, 4.6, 4.8, 5, 5.2, 5.4, 5.5, etc.

In some embodiments, during the feeding process and the stirring process, the pH value in the first treatment is maintained from 4 to 5.5, including but being not limited to 4, 4.2, 4.4, 4.6, 4.8, 5, 5.2, 5.4, 5.5, etc., and the temperature in the first treatment is maintained at 35°C to 55°C, including but being not limited to 35°C, 37°C, 39°C, 41°C, 43°C, 45°C, 47°C, 49°C, 51°C, 53°C, 55°C, etc.

In some embodiments, the ratio of amounts of substance of iron in the ferrous source, oxalate in the oxalate ion source, and borate in the borate ion source is 1: (0.8 to 1): (0.1 to 0.2).

In the embodiments, the ratio of amounts of substance of iron in the ferrous source to oxalate in the oxalate ion source is 1:(0.8 to 1), including but being not limited to 1:0.8, 1:0.85, 1:0.9, 1:0.95, 1:1, etc. The ratio of amounts of substance of iron in the ferrous source to borate in the borate ion source is 1:(0.1 to 0.2), including but being not limited to 1:0.1, 1:0.12, 1:0.14, 1:0.16, 1:0.18, 1:0.2, etc. The ratio of amounts of substance of oxalate in the oxalate ion source to borate in the borate ion source is (0.8 to 1):(0.1 to 0.2), including but being not limited to 0.8:0.1, 0.8:0.2, 0.9:0.1, 0.9:0.2, 1:0.1, 1:0.2, etc.

In some embodiments, the ferrous source is at least one selected from ferrous sulfate, ferrous chloride, and ferrous acetate, and it can be any one of ferrous sulfate, ferrous chloride, and ferrous acetate, or a combination of at least two thereof, for example, a combination of ferrous sulfate and ferrous chloride, a combination of ferrous sulfate and ferrous acetate, a combination of ferrous chloride and ferrous acetate, or a combination of ferrous sulfate, ferrous chloride, and ferrous acetate.

In some embodiments, the oxalate ion source includes at least one of oxalic acid, ammonium oxalate, and sodium oxalate, and it can be any one of oxalic acid, ammonium oxalate, and sodium oxalate, or a combination of at least two thereof, for example, a combination of oxalic acid and ammonium oxalate, a combination of oxalic acid and sodium oxalate, a combination of ammonium oxalate and sodium oxalate, or a combination of oxalic acid, ammonium oxalate and sodium oxalate.

In some embodiments, the borate ion source includes at least one of boric acid, ammonium borate, and sodium borate, and it can be any one of boric acid, ammonium borate, and sodium borate, or a combination of at least two thereof, for example, a combination of boric acid and ammonium borate, a combination of boric acid and sodium borate, a combination of ammonium borate and sodium borate, or a combination of boric acid, ammonium borate, and sodium borate.

In the embodiment, the lithium iron phosphate is doped with anions by using the borate ion source to improve the electrochemical performance of the lithium iron phosphate material; meanwhile the borate ion source acts as a fluxing agent to further reduce the reaction temperature at which the first dried material forms the lithium iron phosphate.

In some embodiment, the first regulator includes at least one of ammonium bicarbonate and sodium bicarbonate. It can be understood that, the first regulator acts as an acid-base regulator for adjusting the pH value of the reaction system during the feeding process, which can be ammonium bicarbonate, sodium bicarbonate or a combination of ammonium bicarbonate and sodium bicarbonate.

S2: Subjecting the mixture to solid-liquid separation and a first slurrying process to obtain a first slurry.

In some embodiments, the solid-liquid separation in step S2 includes one or more of filtration, suction filtration, compression filtration, and centrifugation, which is not particularly limited in the present application.

In some embodiments, after the solid-liquid separation of step S2, the method further includes the following step: washing a solid material obtained by the solid-liquid separation until the conductivity of the washed water is equal to or less than 200 µS/cm to obtain a washed material.

In some embodiments, the first slurrying process in step S2 includes the following steps: mixing and then pulping the washed material and water to obtain the first slurry.

In the embodiments, the water can be selected from distilled water, reverse osmosis water, deionized water, pure water, ultrapure water, and the like, and further preferably is pure water. The solid content of the first slurry is in a range from 30% to 40%, including but being not limited to 30%, 32%, 34%, 36%, 38%, 40%, etc., which is not particularly limited in the present application. The solid content of the first slurry refers to a mass percentage of solid in the first slurry.

S3: Mixing the first slurry, a first lithium source, a first phosphorus source, and a second regulator, followed by a first grinding process and a first drying process to obtain a first dried material.

In some embodiments, a ratio of amounts of substance of iron in the first slurry, lithium in the first lithium source, phosphorus in the first phosphorus source, and the second regulator is 1:(1.04 to 1.1):(1.04 to 1.1):(0.15 to 0.2).

In some embodiments, the ratio of amounts of substance of iron in the first slurry to lithium in the first lithium source is in a range from 1:1.04 to 1:1.1, including but being not limited to 1:1.04, 1:1.05, 1:1.06, 1:1.07, 1:1.08, 1:1.09, 1:1.1, etc. The ratio of amounts of substance of iron in the first slurry to phosphorus in the first phosphorus source is in a range from 1:1.04 to 1:1.1, including but being not limited to 1:1.04, 1:1.05, 1:1.06, 1:1.07, 1:1.08, 1:1.09, 1:1.1, etc. The ratio of amounts of substance of iron in the first slurry to the second regulator is in a range from 1:0.15 to 1:0.2, including but being not limited to 1:0.15, 1:0.16, 1:0.17, 1:0.18, 1:0.19, 1:0.2, etc.

In some embodiments, the first lithium source is at least one selected from lithium oxalate and lithium acetate, which can be lithium oxalate, lithium acetate, or a combination of lithium oxalate and lithium acetate.

In the embodiments, lithium oxalate and lithium acetate with low melting points and low decomposition temperatures are selected as the first lithium source. When at least one of them cooperate with the ferrous oxalate material with a low decomposition temperature and not requiring carbothermal reduction, crystal nuclei of lithium iron phosphate can be formed at a relatively low reaction temperature, which is beneficial to the subsequent induced nucleation.

In some embodiments, the first phosphorus source is at least one selected from phosphoric acid, diammonium hydrogen phosphate, and ammonium dihydrogen phosphate, which can be any one of phosphoric acid, diammonium hydrogen phosphate and ammonium dihydrogen phosphate, or can be a combination of at least two thereof, for example, a combination of phosphoric acid and diammonium hydrogen phosphate, a combination of phosphoric acid and ammonium dihydrogen phosphate, a combination of diammonium hydrogen phosphate and ammonium dihydrogen phosphate, or a combination of phosphoric acid, diammonium hydrogen phosphate and ammonium dihydrogen phosphate.

In some embodiments, the second regulator includes at least one of polyethylene glycol, polyvinyl alcohol, polyvinylpyrrolidone, and a polycarboxylic acid compound. The molecular weight of polyethylene glycol is in a range from 200 to 10,000, including but being not limited to PEG200, PEG400, PEG600, PEG1000, PEG2000, PEG4000, PEG6000, PEG8000, PEG10000, etc, and further preferably PEG600.

In the embodiments, the first regulator can be used as a dispersant to improve the dispersion uniformity of each component in the first slurry, so that each component in the first dried material is fully mixed, which is beneficial to the sufficient contact and reaction of each component when the first dried material forms lithium iron phosphate under a low temperature condition, improving the quality of the final lithium iron phosphate material product, thereby improving the energy efficiency and cycling performance of the battery using the lithium iron phosphate material.

In some embodiments, the first grinding process in step S3 includes the following step: grinding the first slurry to obtain a first ground material with a particle size of 0.1 mm to 0.2 mm.

In the embodiments, the particle size D50 of the first ground material is in a range from 0.1 mm to 0.2 mm, including but being not limited to 0.1 mm, 0.11 mm, 0.12 mm, 0.13 mm, 0.14 mm, 0.15 mm, 0.16 mm, 0.17 mm, 0.18 mm, 0.19 mm, 0.2 mm, etc. The first grinding process can be performed by a ball mill or a sand mill, the inner wall of the grinding device is made of a ceramic material, and the grinding medium is ceramic balls of 0.2 mm±0.03 mm.

In some embodiments, the first drying process in step S3 includes the following step: subjecting the first ground material to spray drying to obtain the first dried material.

In some embodiments, the particle size D50 of the first dried material is in a range from 2 µm to 5 µm, including but being not limited to 2 µm, 2.5 µm, 3 µm, 3.5 µm, 4 µm, 4.5 µm, 5 µm, etc.

The first dried material prepared by steps S1 to S3 contains raw materials such as lithium oxalate and ferrous oxalate with low melting points and low decomposition temperatures, and contains the borate source as the fluxing agent for lowering the melting point, which is beneficial to reacting at a relatively low reaction temperature to form lithium iron phosphate crystal nuclei which serves as a seed crystal for subsequent heterogeneous nucleation.

S4: Mixing a ferric source, a second phosphorus source, a second lithium source, and a carbon source, followed by a second slurrying process, a second grinding process, and a second drying process to obtain a second dried material.

In some embodiments, a ratio of amounts of substance of iron in the ferric source, phosphorus in the second phosphorus source, lithium in the second lithium source, and the carbon source is 1:1:(1.02 to 1.04):(0.2 to 0.3).

In the embodiments, the ratio of amounts of substance of iron in the ferric source to phosphorus in the second phosphorus source is 1:1. The ratio of amounts of substance of iron in the ferric source to lithium in the second lithium source is in a range from 1:1.02 to 1:1.04, including but being not limited to 1:1.02, 1:1.025, 1:1.03, 1:1.035, 1.04, etc. The ratio of amounts of substance of iron in the ferric source to the carbon source is in a range from 1:0.2 to 1:0.3, including but being not limited to 1:0.2, 1:0.21, 1:0.22, 1:0.23, 1:0.24, 1:0.25, 1:0.26, 1:0.27, 1:0.28, 1:0.29, 1:0.3, etc.

In some embodiments, the first phosphorus source is at least one of phosphoric acid and ammonium dihydrogen phosphate. The first lithium source is at least one of lithium oxalate and lithium acetate. The second regulator includes polyethylene glycol.

In some embodiments, the ferric source includes ferric phosphate. The second phosphorus source includes ferric phosphate. The second lithium source includes lithium carbonate. The carbon source is at least one selected from glucose, sucrose, starch, and cellulose. The carbon source can be any one of glucose, sucrose, starch, and cellulose, or can be a combination of at least two thereof, for example, a combination of glucose and sucrose, a combination of glucose and starch, a combination of glucose and cellulose, a combination of sucrose and starch, a combination of sucrose and cellulose, a combination of starch and cellulose, a combination of glucose, sucrose and starch, or a combination of glucose, sucrose, starch and cellulose.

In the embodiments, ferric phosphate is used as the trivalent iron source and the phosphorus source, which requires to be reduced by carbon under a high temperature condition. Further, lithium carbonate with a high melting point and a high decomposition temperature is selected as the lithium source, so that the reaction temperature required for the second dried material to form lithium iron phosphate is relatively high, which is beneficial for the second dried material to preferentially nucleate heterogeneously on the crystal nuclei formed by the first dried material, avoiding the disordered growth and instantaneous rapid nucleation, thereby obtaining the lithium iron phosphate material with more uniform primary particle size distribution and more concentrated primary particle size.

In some embodiments, the ratio of amounts of substance of lithium in the first lithium source to lithium in the second lithium source is in a range from 1:8 to 1:9, including but being not limited to 1:8, 1:8.1, 1:8.2, 1:8.3, 1:8.4, 1:8.5, 1:8.6, 1:8.7, 1:8.8, 1:8.9, or 1:9.

In the embodiments, by regulating the ratio of amounts of substance of the two kinds of lithium sources, the mass ratio of the first dried material to the second dried material can be regulated, and thus the mass ratio of the lithium iron phosphate generated at different reaction temperatures can be precisely regulated, which is beneficial to obtaining the lithium iron phosphate material with more concentrated primary particle size distribution. Specifically, if the ratio of amounts of substance of lithium in the first lithium source to lithium in the second lithium source is less than 1:9, the amount of the first lithium source is relatively less, the mass of the first dried material obtained by the reaction is relatively less, and the number of crystal nuclei formed in early crystallization in the calcination process is relatively less, thereby unable to provide sufficient phase interfaces for subsequent heterogeneous nucleation, and generating phenomena such as disorder growth of crystal nuclei and instantaneous rapid nucleation, and finally resulting in uneven distribution of primary particle size. If the ratio of amounts of substance of lithium in the first lithium source to lithium in the second lithium source is higher than 1:8, the amount of the first lithium source is relatively much, and the number of crystal nuclei formed in early crystallization is too much, which makes some crystal nuclei to not participate in the subsequent heterogeneous nucleation, finally resulting in the uneven distribution of the primary particle size of the lithium iron phosphate material.

In some embodiments, the second slurrying process in step S4 includes the following steps: mixing the ferric source, the second phosphorus source, the second lithium source and the carbon source, then adding water and pulping a resulting mixture to obtain the second slurry.

In the embodiments, the water can be selected from distilled water, reverse osmosis water, deionized water, pure water, ultrapure water, and the like, and further preferably is pure water. The solid content of the second slurry is in a range from 30% to 40%, including but being not limited to 30%, 32%, 34%, 36%, 38%, 40%, etc., which is not particularly limited in the present application. The solid content of the second slurry refers to a mass percentage of solid in the second slurry.

In some embodiments, the second grinding process in step S4 includes the following step: grinding the second slurry to obtain a second ground material with a particle size of 0.2 µm to 0.5 µm.

In the embodiments, the particle size D50 of the second ground material is in a range from 0.2 µm to 0.5 µm, including but being not limited to 0.2µm, 0.25µm, 0.3µm, 0.35µm, 0.4µm, 0.45µm, 0.5µm, etc. The second grinding process can be performed by a ball mill or a sand mill, the inner wall of the grinding device is made of a ceramic material, and the grinding medium is ceramic balls of 0.3 mm±0.03 mm.

In some embodiments, the second drying process in step S4 includes the following step: subjecting the second ground material to spray drying to obtain the second dried material.

In some embodiments, the particle size D50 of the second dried material is in a range from 5 µm to 15 µm, including but being not limited to 5µm, 6µm, 7µm, 8µm, 9µm, 10µm, 11µm, 12µm, 3µm, 14µm, 15µm, etc.

S5: Mixing and then calcining the first dried material and the second dried material to obtain the lithium iron phosphate material.

In some embodiments, the step of mixing and then calcining the first dried material and the second dried material to obtain the lithium iron phosphate material includes:
mixing and then pulverizing the first dried material and the second dried material to obtain a pulverized material; and
in a first protective atmosphere, subjecting the pulverized material to treatments at a second temperature for a second treatment time and then at a third temperature for a third treatment time, to obtain the lithium iron phosphate material;
wherein a particle size D50 of the pulverized material is in a range from 0.5 µm to 1 µm, the second temperature is in a range from 350°C to 450°C, the second treatment time is in a range from 2 h to 3 h, the third temperature is in a range from 600°C to 700°C, and the third treatment time is in a range from 3 h to 6 h.

In the embodiments, the nucleation is induced by the step-by-step calcination method to realize step-by-step nucleation and growth. Specifically, the first dried material has a relatively low chemical reaction temperature and can be fully crystallized and forms crystal nuclei by calcination at 350°C to 450°C. The second dried material has a relatively high reaction temperature and can form the lithium iron phosphate by reaction at 600°C to 700°C, which preferentially nucleates heterogeneously on the crystal nuclei formed by the first dried material and continues to grow. Therefore, the growth rate of crystal nuclei can be controlled by the step-by-step calcination method, thereby avoiding the issue of unconcentrated distribution of particles caused by instantaneous rapid nucleation, and obtaining the lithium iron phosphate material with a more concentrated primary particle size distribution.

In the embodiments, the particle size D50 of the pulverized material is 0.5 µm to 1 µm, including but being not limited to 0.5 µm, 0.6 µm, 0.7 µm, 0.8 µm, 0.9 µm, 1 µm, etc. The pulverization treatment to the mixed first dried material and second dried material can be performed using a mechanical pulverizer or an airflow pulverizer.

In the embodiments, the second temperature is in a range from 350°C to 450°C, including but being not limited to 350°C, 360°C, 370°C, 380°C, 390°C, 400°C, 410°C, 420°C, 430°C, 440°C, 450°C, etc. The second treatment time is in a range from 2 h to 3 h, including but being not limited to 2 h, 2.1 h, 2.2 h, 2.3 h, 2.4 h, 2.5 h, 2.6 h, 2.7 h, 2.8 h, 2.9 h, 3 h, etc. The third temperature is in a range from 600°C to 700°C, including but being not limited to 600°C, 610°C, 620°C, 630°C, 640°C, 650°C, 660°C, 670°C, 680°C, 690°C, 700°C, etc. The third treatment time is in a range from 3 h to 6 h, including but being not limited to 3 h, 3.5 h, 4 h, 4.5 h, 5 h, 5.5 h, and 6 h.

In some embodiments, a heating rate from room temperature to the second temperature is in a range from 100°C/h to 150°C/h, including but being not limited to 100°C/h, 110°C/h, 120°C/h, 130°C/h, 140°C/h, 150°C/h, etc. A heating rate from the second temperature to the third temperature is in a range from 30°C/h to 50°C/h, including but being not limited to 30°C/h, 35°C/h, 40°C/h, 45°C/h, 50°C/h, etc.

In some embodiments, the first protective atmosphere satisfies an oxygen gas content of less than 1 ppm and a humidity of less than 1%. The oxygen gas content of less than 1 ppm is achieved by introducing a protective gas including but being not limited to nitrogen gas, helium gas, neon gas, argon gas, xenon gas, etc, further preferably nitrogen gas. During the calcination, an induced draft fan is turned on in the temperature increasing stage to ensure that the humidity in the temperature maintaining stage is lower than 1%.

In some embodiments, after the calcination process, the method further includes the steps of pulverizing, sieving, iron removal and packaging to obtain the lithium iron phosphate material.

In some embodiments, the pulverizing process after the calcination process is performed by using a fluidized bed airflow pulverizer under a protective atmosphere. Specifically, the Laval nozzle used in the pulverizing cavity of the fluidized bed airflow pulverizer enables the airflow to have a speed up to 2 Mach to 3 Mach, thereby disturbing the material to collide and be pulverized. The protective atmosphere includes, but is not limited to, nitrogen gas, helium gas, neon gas, argon gas, xenon gas, etc., further preferably nitrogen gas. The pressure of the protective atmosphere is in a range from 0.4 MPa to 0.8 MPa, including but being not limited to 0.4 MPa, 0.5 MPa, 0.6 MPa, 0.7 MPa, 0.8 MPa, etc. The temperature of the protective atmosphere is in a range from 100°C to 150°C, including but being not limited to 100°C, 110°C, 120°C, 130°C, 140°C, 150°C, etc.

In some embodiments, the pulverized material is classified in a classifying chamber by a classifying wheel, and the classified material is sieved by an ultrasonic vibrating screen. The sieving, iron removal and packaging are carried out in a room with constant temperature and constant humidity.

In a third aspect, an embodiment of the present application provides a cathode plate. The cathode plate includes a current collector and a cathode material disposed on at least one surface of the current collector in a thickness direction thereof, and the cathode material includes the lithium iron phosphate material as described above or the lithium iron phosphate material prepared by the method as described above.

In the embodiment, the cathode plate and the cathode material contain the above-described lithium iron phosphate material, thereby having the advantage of good discharge performance.

In a fourth aspect, an embodiment of the present application provides a secondary battery. The secondary battery includes the cathode plate as described above, an anode plate, and a separator disposed between the cathode plate and the anode plate.

In the embodiment, the secondary battery contains the cathode plate as described above, thereby having the advantages of excellent cycling performance and high energy efficiency.

Some specific examples are listed below. It should be noted that the examples described below are illustrative and are only used to explain the present application, and cannot be understood as limiting the present application. If specific techniques or conditions are not indicated in the examples, the processes are carried out in accordance with the techniques or conditions described in literature in the art or in accordance with product instructions. The reagents or instruments for which no manufacturers are noted are all common products that can be purchased from the market.

### I. Preparation Method

### Example 1

The method for preparing the lithium iron phosphate material provided in this example includes the following steps:
(1) A ferrous source, an oxalate ion source, a borate ion source, and a first regulator were fed into a reaction solution to obtain a mixed solution, and the pH value was maintained at 4.5, the temperature was maintained at 45°C and the feeding lasted 50 min during the feeding process. The mixed solution continued to be reacted under stirring for 40 min to obtain a mixture.
   The ferrous source was a ferrous sulfate solution, the oxalate ion source was an oxalic acid solution, the borate ion source was a boric acid solution, the first regulator was ammonium bicarbonate, and the reaction solution was an oxalic acid solution with a pH value of 4.5. In the mixture, the ratio of amounts of substance of iron, oxalate, and borate was 1:0.9:0.1.
(2) The mixture was filtered to obtain a solid material. The solid material was washed with pure water until the conductivity of the washed water was less than or equal to 200 µS/cm to obtain a washed material. The washed material was added with pure water and subjected to a first slurrying process to obtain a first slurry with a solid content of 35 wt%.
(3) A first lithium source, a first phosphorus source, and a second regulator were added into the first slurry, and stirred to dissolve to obtain a mixed material. The mixed material was subjected to a first grinding process in a ball mill to obtain a first ground material with a particle size of 0.15 mm, where the inner wall of the ball mill was made of a ceramic material and the grinding medium was ceramic balls of 0.2 mm±0.03 mm. The first ground material was subjected to spray drying to obtain a first dried material with a particle size of 3.5 µm.
   The first lithium source was lithium oxalate. The first phosphorus source was a mixed solution containing phosphoric acid and ammonium dihydrogen phosphate and having a pH value of 2.9. The second regulator was PEG6000. The ratio of amounts of substance of iron in the first slurry, lithium in the first lithium source, phosphorus in the first phosphorus source, and the second regulator was 1:1.06:1.08:0.18.
(4) A ferric source, a second phosphorus source, a second lithium source, and a carbon source were mixed and then added with water to obtain a mixed material. The mixed material was subject to a second slurrying process to obtain a second slurry with a solid content of 35%. The second slurry was subjected to a second grinding process in a ball mill to obtain a second ground material with a particle size of 0.34 µm, where the inner wall of the ball mill was made of ceramic material, and the grinding medium was ceramic balls of 0.3 mm±0.03 mm. The second ground material was subjected to spray drying to obtain a second dried material with a particle size of 12 µm.
   The ferric source and the second phosphorus source were ferric phosphate, the second lithium source was lithium carbonate, and the carbon source was glucose. The ratio of amounts of substance of iron or phosphorus in the ferric phosphate, lithium in the lithium carbonate, and the glucose was 1:1.03:0.25. The ratio of amounts of substance of lithium in the first lithium source to lithium in the second lithium source was 1:8.5.
(5) The first dried material and the second dried material were mixed, and then pulverized with an airflow pulverizer to obtain a pulverized material with a particle size of 0.8 µm. The pulverized material was calcined in a roller furnace, where nitrogen gas was introduced to maintain the oxygen content in the roller furnace to be lower than 1 ppm, and an induced draft fan was turned on in the heating stage to make the humidity in the temperature maintaining stage to lower than 1%. The pulverized material was first heated to a temperature of 400°C at a heating rate of 120°C/h and held at 400°C and reacted for 2.5 h; and then was heated to a temperature of 600°C at a heating rate of 40°C/h and held at 600°C and reacted for 5 h. Next, the calcined material was cooled down to a temperature of less than or equal to 100°C and then discharged from the furnace.
(6) After discharged from the furnace, the calcined material was pulverized by a fluidized bed airflow pulverizer under a nitrogen gas atmosphere with a pressure of 0.6 MPa and a temperature of 135°C. The Laval nozzle used in the pulverizing cavity of the fluidized bed airflow pulverizer enabled the airflow to have a speed up to 2.5 Mach, so that the material was disturbed to collide and thus was pulverized. The pulverized material was classified in a classifying chamber by a classifying wheel, and the classified material was sieved by an ultrasonic vibrating screen to obtain the lithium iron phosphate material, where the sieving, iron removal and packaging were carried out in a room with constant temperature and constant humidity.

### Example 2

The method for preparing the lithium iron phosphate material provided in this example includes the following steps:
A ferrous source, an oxalate ion source, a borate ion source, and a first regulator were fed into a reaction solution to obtain a mixed solution, and the pH value was maintained at 4, the temperature was maintained at 35°C and the feeding lasted 30 min during the feeding process. The mixed solution continued to be reacted under stirring for 30 min to obtain a mixture.

The ferrous source was a ferrous acetate, the oxalate ion source was oxalic acid, the borate ion source was boric acid, the first regulator was sodium bicarbonate, and the reaction solution was an oxalic acid solution with a pH value of 4. In the mixture, the ratio of amounts of substance of iron, oxalate, and borate was 1:0.8:0.1.

(2) The mixture was filtered to obtain a solid material. The solid material was washed with pure water until the conductivity of the washed water was less than or equal to 200 µS/cm to obtain a washed material. The washed material was added with pure water and subjected to a first slurrying process to obtain a first slurry with a solid content of 35 wt%.

(3) A first lithium source, a first phosphorus source, and a second regulator were added into the first slurry, and stirred to dissolve to obtain a mixed material. The mixed material was subjected to a first grinding process in a ball mill to obtain a first ground material with a particle size of 0.1 mm, where the inner wall of the ball mill was made of ceramic material, and the grinding medium was ceramic balls of 0.2 mm±0.03 mm. The first ground material was subjected to spray drying to obtain a first dried material with a particle size of 2 µm.

The first lithium source was lithium oxalate. The first phosphorus source was a mixed solution containing phosphoric acid and ammonium dihydrogen phosphate and having a pH value of 2.5. The second regulator was PEG6000. The ratio of amounts of substance of iron in the first slurry, lithium in the first lithium source, phosphorus in the first phosphorus source, and the second regulator was 1:1.04:1.04:0.15.

(4) A ferric source, a second phosphorus source, a second lithium source, and a carbon source were mixed and then added with water to obtain a mixed material. The mixed material was subject to a second slurrying process to obtain a second slurry with a solid content of 35%. The second slurry was subjected to a second grinding process in a ball mill to obtain a second ground material with a particle size of 0.2 µm, where the inner wall of the ball mill was made of ceramic material, and the grinding medium was ceramic balls of 0.3 mm±0.03 mm. The second ground material was subjected to spray drying to obtain a second dried material with a particle size of 5 µm.

The ferric source and the second phosphorus source were ferric phosphate, the second lithium source was lithium carbonate, and the carbon source was glucose. The ratio of amounts of substance of iron or phosphorus in the ferric phosphate, lithium in the lithium carbonate, and the glucose was 1:1.02:0.2. The ratio of amounts of substance of lithium in the first lithium source to lithium in the second lithium source was 1:8.

(5) The first dried material and the second dried material were mixed, and then pulverized with an airflow pulverizer to obtain a pulverized material with a particle size of 0.5 µm. The pulverized material was calcined in a roller furnace, where nitrogen gas was introduced to maintain the oxygen content in the roller furnace to be lower than 1 ppm, and an induced draft fan was turned on in the heating stage to make the humidity in the temperature maintaining stage to lower than 1%. The pulverized material was first heated to a temperature of 350°C at a heating rate of 100°C/h and held at 350°C and reacted for 2 h; and then was heated to a temperature of 600°C at a heating rate of 30°C/h and held at 600°C and reacted for 3 h. Next, the calcined material was cooled down to a temperature of less than or equal to 100°C and then discharged from the furnace.

(6) After discharged from the furnace, the calcined material was pulverized by a fluidized bed airflow pulverizer under a nitrogen gas atmosphere with a pressure of 0.4 MPa and a temperature of 100°C. The Laval nozzle used in the pulverizing cavity of the fluidized bed airflow pulverizer enabled the airflow to have a speed up to 2 Mach, so that the material was disturbed to collide and thus was pulverized. The pulverized material was classified in a classifying chamber by a classifying wheel, and the classified material was sieved by an ultrasonic vibrating screen to obtain the lithium iron phosphate material, where the sieving, iron removal and packaging were carried out in a room with constant temperature and constant humidity.

### Example 3

The method for preparing the lithium iron phosphate material provided in this example includes the following steps:
(1) A ferrous source, an oxalate ion source, a borate ion source, and a first regulator were fed into a reaction solution to obtain a mixed solution, and the pH value was maintained at 5.5, the temperature was maintained at 55°C and the feeding lasted 60 min during the feeding process. The mixed solution continued to be reacted under stirring for 60 min to obtain a mixture.
   The ferrous source was a ferrous sulfate solution, the oxalate ion source was an oxalic acid solution, the borate ion source was a boric acid solution, the first regulator was ammonium bicarbonate, and the reaction solution was an oxalic acid solution with a pH value of 5.5. In the mixture, the ratio of amounts of substance of iron, oxalate, and borate was 1:1:0.2.
(2) The mixture was filtered to obtain a solid material. The solid material was washed with pure water until the conductivity of the washed water was less than or equal to 200 µS/cm to obtain a washed material. The washed material was added with pure water and subjected to a first slurrying process to obtain a first slurry with a solid content of 40%.
(3) A first lithium source, a first phosphorus source, and a second regulator were added into the first slurry, and stirred to dissolve to obtain a mixed material. The mixed material was subjected to a first grinding process in a ball mill to obtain a first ground material with a particle size of 0.2 mm, where the inner wall of the ball mill was made of ceramic material, and the grinding medium was ceramic balls of 0.2 mm±0.03 mm. The first ground material was subjected to spray drying to obtain a first dried material with a particle size of 5 µm.
   The first lithium source was lithium oxalate. The first phosphorus source was a mixed solution containing phosphoric acid and ammonium dihydrogen phosphate and having a pH value of 2.9. The second regulator was PEG6000. The ratio of amounts of substance of iron in the first slurry, lithium in the first lithium source, phosphorus in the first phosphorus source, and the second regulator was 1:1.1:1.1:0.2.
(4) A ferric source, a second phosphorus source, a second lithium source, and a carbon source were mixed and then added with water to obtain a mixed material. The mixed material was subject to a second slurrying process to obtain a second slurry with a solid content of 40 wt%. The second slurry was subjected to a second grinding process in a ball mill to obtain a second ground material with a particle size of 0.5 µm, where the inner wall of the ball mill was made of ceramic material, and the grinding medium was ceramic balls of 0.3 mm±0.03 mm. The second ground material was subjected to spray drying to obtain a second dried material with a particle size of 15 µm.
   The ferric source and the second phosphorus source were ferric phosphate, the second lithium source was lithium carbonate, and the carbon source was glucose. The ratio of amounts of substance of iron or phosphorus in the ferric phosphate, lithium in the lithium carbonate, and the glucose was 1:1.03:0.25. The ratio of amounts of substance of lithium in the first lithium source to lithium in the second lithium source was 1:9.
(5) The first dried material and the second dried material were mixed, and then pulverized with an airflow pulverizer to obtain a pulverized material with a particle size of 1 µm. The pulverized material was calcined in a roller furnace, where nitrogen gas was introduced to maintain the oxygen content in the roller furnace to be lower than 1 ppm, and an induced draft fan was turned on in the heating stage to make the humidity in the temperature maintaining stage to lower than 1%. The pulverized material was first heated to a temperature of 450°C at a heating rate of 150°C/h and held at 450°C and reacted for 3 h; and then was heated to a temperature of 700°C at a heating rate of 50°C/h and held at 700°C and reacted for 6 h. Next, the calcined material was cooled down to a temperature of less than or equal to 100°C and then discharged from the furnace.
(6) After discharged from the furnace, the calcined material was pulverized by a fluidized bed airflow pulverizer under a nitrogen gas atmosphere with a pressure of 0.8 MPa and a temperature of 150°C. The Laval nozzle used in the pulverizing cavity of the fluidized bed airflow pulverizer enabled the airflow to have a speed up to 3 Mach, so that the material was disturbed to collide and thus was pulverized. The pulverized material was classified in a classifying chamber by a classifying wheel, and the classified material was sieved by an ultrasonic vibrating screen to obtain the lithium iron phosphate material, where the sieving, iron removal and packaging were carried out in a room with constant temperature and constant humidity.

### Example 4

The method for preparing the lithium iron phosphate material provided in this example was the same as or similar to that of Example 1, except that:
In step (4), the ratio of amounts of substance of iron or phosphorus in ferric phosphate, lithium in the lithium carbonate, and the glucose was 1:1.04:0.3.

### Example 5

The method for preparing the lithium iron phosphate material provided in this example was the same as or similar to that of Example 1, except that:
In step (1), the ferrous source was replaced with a ferrous chloride solution, the oxalate ion source was an ammonium oxalate solution, and the borate ion source was an ammonium borate solution.

### Example 6

The method for preparing the lithium iron phosphate material provided in this example was the same as or similar to that of Example 1, except that:
In step (1), the ferrous source was replaced with an equimolar amount of ferrous acetate solution, the oxalate ion source was a sodium oxalate solution, and the borate ion source was a sodium borate solution.

In step (3), the first lithium source was lithium acetate.

### Example 7

The method for preparing the lithium iron phosphate material provided in this example was the same as or similar to that of Example 1, except that:
In step (1), in the mixture, the ratio of amounts of substance of iron, oxalate, and borate is 1:0.6:0.05.

In step (3), the ratio of amounts of substance of iron in the first slurry, lithium in the first lithium source, phosphorus in the first phosphorus source, and the second regulator was 1:1:1.02:0.12.

### Example 8

The method for preparing the lithium iron phosphate material provided in this example was the same as or similar to that of Example 1, except that:
In step (1), in the mixture, the ratio of amounts of substance of iron, oxalate, and borate was 1:1.2:0.3.

In step (3), the ratio of amounts of substance of iron in the first slurry, lithium in the first lithium source, phosphorus in the first phosphorus source, and the second regulator was 1:1.2:1.2:0.3.

### Example 9

The method for preparing the lithium iron phosphate material provided in this example was the same as or similar to that of Example 1, except that:
In step (4), the ratio of amounts of substance of iron or phosphorus in the ferric phosphate, lithium in the lithium carbonate, and the glucose was 1:0.96:0.18.

### Example 10

The method for preparing the lithium iron phosphate material provided in this example was the same as or similar to that of Example 1, except that:
In step (4), the ratio of amounts of substance of iron or phosphorus in the ferric phosphate, lithium in the lithium carbonate, and the glucose was 1:1.10:0.35.

### Example 11

The method for preparing the lithium iron phosphate material provided in this example was the same as or similar to that of Example 1, except that:
In step (4), the ratio of amounts of substance of lithium in the first lithium source to lithium in the second lithium source was 1:7.

### Example 12

The method for preparing the lithium iron phosphate material provided in this example was the same as or similar to that of Example 1, except that:
In step (4), the ratio of amounts of substance of lithium in the first lithium source to lithium in the second lithium source was 1:10.

### Comparative Example 1

Compared with Example 1, the process of preparing the first dried material was not performed; and the second dried material obtained in step (4) was directly calcined according to step (5), and then pulverized, sieved, iron-removed and packaged according to step (6) to obtain the lithium iron phosphate material.

### Comparative Example 2

Compared with Example 1, the process of preparing the second dried material was not performed; and the first dried material prepared according to steps (1) to (3) was calcined according to step (5), and then pulverized, sieved, iron-removed and packaged according to step (6) to obtain the lithium iron phosphate material.

### II. Test Methods

### (I) Performance tests of cathode materials

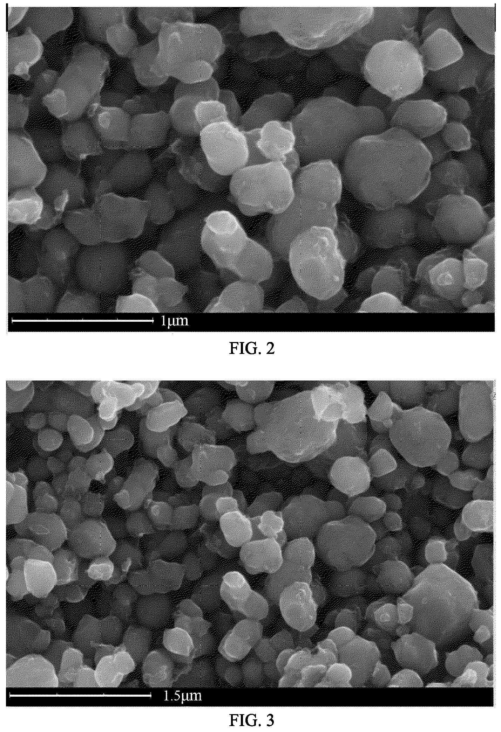

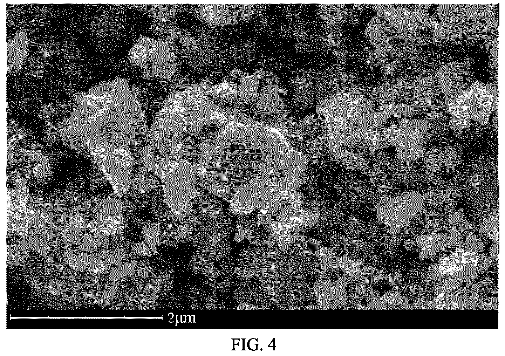

1. SEM test: The morphologies of lithium iron phosphate materials were characterized by MERLIN Compact field emission scanning electron microscope (SEM) with a model of Quanta 200FEG produced by Zeiss. The results are shown in FIG. 2 and FIG.3. FIG. 2 shows a first morphology image of the lithium iron phosphate material prepared in Example 1 of the present application. FIG. 3 shows a second morphology image of the lithium iron phosphate material prepared in Example 1 of the present application. FIG. 4 is a morphology image of the lithium iron phosphate material prepared in Comparative Example 1 of the present application.
2. Element content: The content of each element in the lithium iron phosphate materials was measured by an inductively coupled plasma optical emission spectrometer (ICP-OES).
3. BET specific surface area: Measured by the gas adsorption BET method.
4. Powder resistivity: Measured by the four-point probe method at a test pressure of 10 MPa.
5. Compaction density: Measured by a compaction density tester with a test pressure of 3 T and a pressing time of 30 seconds.
6. Tapped density: Measured by a tapped density tester with a tapping number of 5,000 times.
7. pH value: Determined according to "GB/T 9724-2007 Chemical reagent-General rule for the determination of pH".
8. Span of the primary particles: The D10 particle size, particle size D50, and D90 particle size of the primary particles were measured by a laser particle size tester, and the span of the primary particles was calculated according to (D90-D10)÷D50.
9. Particle size D50 of the primary particles: Observed by a scanning electron microscope (SEM).
10. Free Li content: Measured by the automatic potentiometric titration.
11. Iron dissolution amount: 10 g of a sample to be tested was added to 100 mL of hydrogen fluoride-ethanol solution with a concentration of 0.1 mol/L, stirred at a temperature of 45°C for 30 min to dissolve, and then filtered. The obtained filtrate was measured by ICP-OES to determine the content of iron element therein, i.e., the amount of dissolved iron.

### (II) Performance tests of secondary batteries

Each of the lithium iron phosphate materials prepared in examples and comparative examples was mixed with ultrafine carbon powder (Super P, SP) and polyvinylidene difluoride (PVDF) in a mass ratio of 92:4:4. Then, N-methylpyrrolidone (NMP) was added for slurrying and then the slurry was coated on an aluminum foil. Next, the coated foil was dried and pressed to obtain the cathode plate. A button battery was assembled by using a lithium plate as an anode, and 1 M of electrolyte, where the 1 M of electrolyte was prepared by dissolving lithium hexafluorophosphate (LiPF₆) as a lithium salt in an organic solvent, and the organic solvent was ethylene carbonate (EC), ethyl methyl carbonate (EMC) and diethyl carbonate (DEC) at a volume ratio of 1:1:1. The charge specific capacity and discharge specific capacity of the button battery were tested at 0.1C rate and 1C rate respectively, and the discharge energy efficiency of the button battery was tested at a discharge rate of 0.5 P. The tests were conducted at a temperature of 25°C and a voltage range of 2.0 V to 3.75 V.

### III. Analysis of test results of each of examples and comparative examples

The results measured according to the above test methods are shown in Tables 1 to 3, respectively.

**Table 1**

| Solutions | Element content (mass percentage) | | | | | Particle size D50 of primary particles (nm) | Span of primary particles | Proportion of numbers of particles with primary particle size of 100 nm to 600 nm (%) |
|---|---|---|---|---|---|---|---|---|
| | Li/% | Fe/% | P/% | B/ppm | C/% | | | |
| Example 1 | 5.27 | 34.35 | 19.12 | 784 | 1.54 | 204 | 1.2 | 97 |
| Example 2 | 5.02 | 34.17 | 19.48 | 473 | 1.45 | 235 | 1.4 | 96.5 |
| Example 3 | 5.34 | 24.15 | 19.98 | 1258 | 1.65 | 168 | 1.5 | 95.5 |
| Example 4 | 5.39 | 34.29 | 19.01 | 747 | 1.69 | 162 | 1.8 | 96.9 |
| Example 5 | 5.26 | 34.31 | 19.16 | 778 | 1.52 | 201 | 1.2 | 97.2 |
| Example 6 | 5.28 | 34.32 | 19.11 | 789 | 1.53 | 209 | 1.2 | 97.3 |
| Example 7 | 4.99 | 35.78 | 18.05 | 784 | 1.59 | 305 | 2.5 | 94.6 |
| Example 8 | 5.69 | 33.12 | 20.79 | 367 | 1.89 | 145 | 2.3 | 93.9 |
| Example 9 | 4.76 | 35.78 | 20.89 | 887 | 1.51 | 256 | 1.9 | 96.2 |
| Example 10 | 5.98 | 33.87 | 18.67 | 697 | 1.98 | 142 | 2.3 | 96.1 |
| Example 11 | 5.31 | 34.23 | 19.01 | 858 | 1.52 | 148 | 2.4 | 95.2 |
| Example 12 | 5.21 | 34.98 | 19.45 | 711 | 1.57 | 268 | 2.5 | 93.5 |
| Comparative Example 1 | 5.19 | 34.67 | 19.21 | 1.51 | 1.37 | 325 | 4.8 | 91.5 |
| Comparative Example 2 | 5.99 | 33.98 | 19.01 | 1436 | 1.74 | 128 | 6.1 | 92.1 |

**Table 2**

| Solutions | Powder resistivity /(m²/g) | BET/(m²/g) | Compaction density /(g/mL) | Tapped density /(g/mL) | Free Li content/ppm | Iron dissolution amount/ppm | pH value |
|---|---|---|---|---|---|---|---|
| Example 1 | 8.96 | 10.2 | 2.48 | 1.23 | 456 | 17.5 | 8.78 |
| Example 2 | 9.12 | 8.1 | 2.49 | 1.29 | 379 | 16.4 | 8.57 |
| Example 3 | 7.35 | 11.2 | 2.42 | 1.32 | 548 | 14.7 | 8.97 |
| Example 4 | 6.16 | 11.8 | 2.41 | 1.21 | 497 | 16.8 | 9.13 |
| Example 5 | 8.47 | 10 | 2.45 | 1.21 | 447 | 17.1 | 8.68 |
| Example 6 | 8.68 | 10.4 | 2.46 | 1.22 | 451 | 17.2 | 8.80 |
| Example 7 | 15.4 | 10.8 | 2.37 | 1.21 | 213 | 60.8 | 8.38 |
| Example 8 | 13.7 | 13.8 | 2.31 | 1.11 | 807 | 125.8 | 10.89 |
| Example 9 | 14.7 | 12.8 | 2.51 | 1.29 | 367 | 78.5 | 8.56 |
| Example 10 | 13.6 | 14.1 | 2.25 | 1.05 | 986 | 86.4 | 10.57 |
| Example 11 | 15.5 | 12.8 | 2.38 | 1.11 | 589 | 30.4 | 9.56 |
| Example 12 | 20.4 | 8.9 | 2.55 | 1.34 | 398 | 17.1 | 8.47 |
| Comparative Example 1 | 34.7 | 7.8 | 2.59 | 1.38 | 218 | 10.5 | 8.13 |
| Comparative Example 2 | 23.8 | 16.8 | 2.17 | 1.01 | 679 | 45.9 | 10.96 |

**Table 3**

| Solutions | Initial charge specific capacity at 0.1C (mAh/g) | Initial discharge specific capacity at 0.1C (mAh/g) | Initial charge specific capacity at 1C (mAh/g) | Initial discharge specific capacity at 1C (mAh/g) | Discharge energy efficiency at 0.5P (%) | Capacity retention rate at 1000th cycle at 1C rate and normal temperature (%) |
|---|---|---|---|---|---|---|
| Example 1 | 163.5 | 159.9 | 148.9 | 147.9 | 95.5 | 98.5 |
| Example 2 | 162.9 | 159.5 | 148.5 | 147.5 | 95.4 | 98.4 |
| Example 3 | 163.1 | 159.2 | 148.3 | 147.1 | 95.3 | 98.2 |
| Example 4 | 163.3 | 159.7 | 148.6 | 147.6 | 95.5 | 98.5 |
| Example 5 | 163.4 | 159.8 | 148.9 | 147.8 | 95.4 | 98.4 |
| Example 6 | 163.3 | 159.6 | 148.8 | 147.8 | 95.5 | 98.3 |
| Example 7 | 160.5 | 157.8 | 144.6 | 145.7 | 94.7 | 97.8 |
| Example 8 | 160.7 | 157.9 | 144.9 | 145.9 | 94.9 | 97.9 |
| Example 9 | 161.5 | 157.9 | 144.1 | 145.2 | 94.8 | 97.8 |
| Example 10 | 161.7 | 157.6 | 143.8 | 144.9 | 94.9 | 97.7 |
| Example 11 | 161.2 | 157.8 | 143.7 | 144.8 | 94.6 | 97.6 |
| Example 12 | 160.9 | 158.1 | 144.2 | 144.9 | 94.7 | 97.9 |
| Comparative Example 1 | 160.1 | 157.1 | 143.2 | 144.2 | 94.3 | 97.2 |
| Comparative Example 2 | 161.4 | 158.3 | 144.1 | 145.7 | 94.5 | 98.1 |

As can be seen from Table 1, the mass percentage of each element in the lithium iron phosphate materials prepared in Examples 1 to 12 is as follows: Li element is in a range from 4.76% to 5.98%, Fe element is in a range from 24.15% to 35.78%, P element is in a range from 18.05% to 20.89%, B element is in a range from 367 ppm to 1258 ppm, and C element is in a range from 1.45% to 1.98%. Therefore, it can be inferred that the lithium iron phosphate material includes a core and a coating layer coated on the surface of the core, wherein the core is represented by a molecular formula of LiₐFe(PO₄)_{b}(BO₃)_{c}, where 1.02≤a≤1.05, 0.98≤b≤1.08, 0.01≤c≤0.02. The coating layer includes a carbon material, and the mass percentage of the carbon material in the lithium iron phosphate material is in a range from 1.45% to 1.98%.

From Table 1 and FIG. 2 to FIG. 4, it can be seen that the lithium iron phosphate material prepared by the conventional solid-phase method in Comparative Example 1 has a particle size D50 of primary particles of 325 nm and a span of primary particles of 4.8, and the proportion of numbers of particles with a primary particle size of 100 nm to 600 nm is only 91.5%, indicating uneven distribution of the primary particle size. In Comparative Example 2, the first dried material with a relatively low reaction temperature was selected for calcination, pulverizing, sieving, and other treatments to prepare the lithium iron phosphate material; and the particle size D50 of primary particles of the lithium iron phosphate material is a very small, but the span of primary particles reaches 6.1, and the proportion of numbers of particles with primary particle size of 100 nm to 600 nm is only 92.1%, also indicating uneven distribution of the primary particle size. In Examples 1 to 12, the prepared lithium iron phosphate materials have a particle size D50 of primary particles in a range from 142 nm to 305 nm and a span of primary particles in a range from 1.2 to 2.5, and the proportion of numbers of particles with the primary particle size of 100 nm to 600 nm is in a range from 93.5% to 97.3%, which shows more uniform primary particle size distribution and smaller particle size D50 of primary particles when compared with the lithium iron phosphate materials prepared in Comparative Examples 1 to 2. These indicate that in Examples 1 to 12, through the synergistic cooperation of the first dried material and the second dried material having different reaction temperatures, the growth rate of the crystal nuclei of lithium iron phosphate is effectively adjusted, realizing the step-by-step nucleation and growth, and thereby obtaining the lithium iron phosphate materials with uniform primary particle size distribution and relatively small primary particle size. Moreover, the span of the lithium iron phosphate materials prepared in Examples 1 to 6 are smaller, and the proportion of numbers of particles with the primary particle size of 100 nm to 600 nm is higher, indicating that the precise control of the ratio of amounts of substance of each raw material can improve the distribution uniformity of the primary particle size.

As can be seen from Table 2, the lithium iron phosphate materials prepared in Examples 1 to 12 have a compaction density of 2.25 g/mL to 2.55 g/mL, a tapped density of 1.05 g/mL to 1.34 g/mL, a BET specific surface area of 8.1 m²/g to 14.1 m²/g, a powder resistivity of 6.16 Ω·cm to 20.4 Ω·cm, a free Li content of 213 ppm to 986 ppm, an iron dissolution amount of 14.7 ppm to 125.8 ppm, and a pH value of 8.38 to 10.89. Further, the lithium iron phosphate materials of Examples 1 to 6 have a compaction density of 2.41 g/mL or more, a tapped density of 1.21 g/mL or more, a BET specific surface area of 11.8 m²/g or less, a powder resistivity of 9.12 Ω·cm or less, a free Li content of 548 ppm or less, an iron dissolution amount of 17.5 ppm, and a pH value of 8.57 to 9.13, indicating that controlling the ratio of amounts of substance of each raw material within a suitable range is beneficial to obtaining relatively high compaction density and tapped density, more suitable BET specific surface area, relatively low powder resistivity, relatively low free Li content, relatively low iron dissolution amount, and appropriate pH value.

Compared with Example 1, in Examples 11 and 12, the ratio of amounts of substance of lithium in the first lithium source to lithium in the second lithium source was not controlled in the range of 1:8 to 1:9. As a result, the lithium iron phosphate material prepared in Example 11 exhibited significantly decreased compaction density and tapped density, a relatively high BET specific surface area, and significantly improved powder resistivity. In Example 12, although the prepared lithium iron phosphate material exhibited relatively high compaction density and tapped density, the powder resistivity was more than twice higher than that of Example 1, which indicates that the electrical conductivity of the lithium iron phosphate material prepared in Example 12 is significantly deteriorated, thus affecting the charge specific capacity and discharge specific capacity, rate performance, energy efficiency and cycling performance. These indicates that controlling the feed ratio of the first lithium source to the second lithium source is beneficial to greatly reducing the powder resistivity of the lithium iron phosphate material while increasing the compaction density and tap density, thereby greatly improving the electrical conductivity thereof and contributing to achieving excellent electrical performances.

Compared with Comparative Examples 1 and 2, the lithium iron phosphate material prepared in Example 1 exhibited greatly decreased powder resistivity, which proved that uniform primary particle size distribution can significantly reduce the powder resistivity of the lithium iron phosphate material, improve the electrical conductivity, and result in good consistency in the discharge process. Further, compared with Comparative Example 1, the lithium iron phosphate material prepared in Example 1 exhibited significantly increased specific surface area, which indicated that the contact area between the lithium iron phosphate material and the electrolyte is relatively large, and the channels for ion transport and electron conduction are increased, thereby being beneficial to reducing internal resistance, increasing specific capacity, and improving rate performance, etc. Compared with Comparative Example 2, the lithium iron phosphate material prepared in Example 1 exhibited higher compaction density and tapped density, more moderate BET specific surface area, and decreased free Li content, iron dissolution amount and pH value, which proved that the synergistic cooperation of the first dried material and the second dried material can ensure the uniformity of the primary particle size distribution and obtains lithium iron phosphate material with appropriate specific surface area and improved performances such as compaction density, tapped density, etc.

As can be seen from Table 3, the lithium iron phosphate materials prepared in Examples 1 to 12 exhibited 0.1C initial charge specific capacity of 160.5 mAh/g to 163.5 mAh/g, 0.1C initial discharge specific capacity of 157.6 mAh/g to 159.9 mAh/g, 1C initial charge specific capacity of 143.7 mAh/g to 148.9 mAh/g, 1C initial discharge specific capacity of 144.8 mAh/g to 147.9 mAh/g, 0.5P discharge energy efficiency of 94.60% to 95.50%, and capacity retention rate at 1000th cycle at 1C rate and normal temperature of 97.6% to 98.5%. The specific capacity, rate performance, discharge energy efficiency, and cycling performance thereof are significantly superior to those of the lithium iron phosphate material prepared by the conventional solid-phase method in Comparative Example 1, which proves that the uniformity of the primary particle size distribution can effectively ensure the consistency of the lithium iron phosphate material in the discharge process, thereby ensuring that the battery has relatively high specific capacity, relatively good rate performance, relatively high discharge energy efficiency, and relatively good cycling performance. Compared with the lithium iron phosphate material prepared by calcination of the first dried material with a relatively low reaction temperature in Comparative Example 2, the lithium iron phosphate material prepared in Example 1 also exhibited significantly increased specific capacity, rate performance, discharge energy efficiency and cycling performance. This is because the uniformity of the primary particle size distribution can result in relatively low powder resistivity, relatively high compaction density and tapped density and a more moderate BET specific surface area, thereby ensuring that the specific capacity, rate performance, discharge energy efficiency and cycling performance of the lithium iron phosphate material can be comprehensively improved. Further, the lithium iron phosphate materials prepared in Examples 1 to 6 exhibited 0.1C initial charge specific capacity greater than or equal to 162.9 mAh/g, 0.1C initial discharge specific capacity greater than or equal to 159.2 mAh/g, 1C initial charge specific capacity greater than or equal to 148.3 mAh/g, 1C initial discharge specific capacity greater than or equal to 147.1 mAh/g, 0.5P discharge energy efficiency greater than or equal to 95.30%, and capacity retention rate at 1000th cycle at 1C rate and normal temperature greater than or equal to 98.2%. The charge specific capacity and discharge specific capacity, discharge energy efficiency and cycling performance are significantly superior to those of Examples 7 to 12, which indicates that by controlling the ratio of amounts of substance of each material within an appropriate range, the uniformity of the primary particle size distribution of the lithium iron phosphate material can be further improved, the compaction density and tapped density can be improved, and the powder resistivity can be reduced, thus exhibiting more excellent electrical performances.

To sum up, in the present application, raw materials with low melting points and low decomposition temperatures are selected to prepare a first dried material with a low chemical reaction temperature, raw materials with high melting points and high decomposition temperatures are selected to prepare a second dried material with a high chemical reaction temperature. Using the two dried materials with different chemical reaction temperatures realizes step-by-step nucleation and growth, which avoids the issue of extremely uneven distribution of primary particle size caused by disordered growth and instantaneous rapid nucleation of lithium iron phosphate crystal nuclei, thereby obtaining the lithium iron phosphate material with uniform primary particle size distribution and highly concentrated primary particle size, and thus exhibiting the advantages of high specific capacity, good rate performance, high discharge energy efficiency and excellent cycling performance.

It should be noted that the present application is not limited to the foregoing embodiments. The foregoing embodiments are merely examples, and embodiments having substantially the same configurations and effects as those of the technical conceptions within the scope of the present application are all included in the technical scope of the present application. In addition, various modifications that can be conceived by those skilled in the art may be made to the embodiments without departing from the spirit and scope of the present application, and other embodiments that are constructed by combining some of the components in the embodiments are also included in the scope of the present application.

## Claims

1. A lithium iron phosphate material, comprising a core represented by a molecular formula of LiₐFe(PO₄)_{b}(BO₃)_{c}, where 1.02≤a≤1.05, 0.98≤b≤1.08, 0.01≤c≤0.02, wherein a proportion of numbers of particles with a primary particle size ranging from 100 nm to 600 nm is greater than or equal to 93.5%.

2. The lithium iron phosphate material according to claim 1, wherein a span of primary particles of the lithium iron phosphate material is in a range from 0.5 to 2.5, and a particle size D50 of the primary particles is in a range from 140 nm to 320 nm;
the lithium iron phosphate material has a compaction density of 2.20 g/mL to 2.60 g/mL, a BET specific surface area of 8.0 m²/g to 15.0 m²/g, and a powder resistivity of 5.00 Ω·cm to 22.00 Ω·cm.

3. The lithium iron phosphate material according to claim 1 or 2, wherein the lithium iron phosphate material further comprises a coating layer coated on a surface of the core,
wherein a material of the coating layer comprises a carbon material, and a mass percentage of the carbon material in the lithium iron phosphate material is in a range from 1.10% to 2.00%.

4. A method for preparing a lithium iron phosphate material, comprising following steps:
mixing a ferrous source, an oxalate ion source, a borate ion source and a first regulator in a reaction solution, obtaining a mixture through a first treatment;
subjecting the mixture to solid-liquid separation and a first slurrying process to obtain a first slurry;
mixing the first slurry, a first lithium source, a first phosphorus source and a second regulator, followed by a first grinding process and a first drying process to obtain a first dried material;
mixing a ferric source, a second phosphorus source, a second lithium source and a carbon source, followed by a second slurrying process, a second grinding process and a second drying process to obtain a second dried material; and
mixing and then calcining the first dried material and the second dried material to obtain the lithium iron phosphate material.

5. The method for preparing the lithium iron phosphate material according to claim 4, wherein a step of mixing the ferrous source, the oxalate ion source, the borate ion source and the first regulator in the reaction solution, obtaining the mixture through the first treatment comprises:
mixing the ferrous source, the oxalate ion source, the borate ion source and the first regulator in the reaction solution, obtaining the mixture through treatment at a first temperature for a first treatment time;
wherein a pH value of the reaction solution is in a range from 4 to 5.5, the first temperature is in a range from 35°C to 55°C, and the first treatment time is in a range from 60 min to 120 min.

6. The method for preparing the lithium iron phosphate material according to claim 4 or 5, wherein a ratio of amounts of substance of iron, oxalate, and borate in the mixture is 1:(0.8 to 1):(0.1 to 0.2);
a ratio of amounts of substance of iron in the first slurry, lithium in the first lithium source, phosphorus in the first phosphorus source, and the second regulator is 1:(1.04 to 1.1):(1.04 to 1.1):(0.15 to 0.2);
a ratio of amounts of substance of iron in the ferric source, phosphorus in the second phosphorus source, lithium in the second lithium source, and carbon in the carbon source is 1:1:(1.02 to 1.04):(1.2 to 1.8);
a ratio of amounts of substance of lithium in the first lithium source to lithium in the second lithium source is 1:(8 to 9).

7. The method for preparing the lithium iron phosphate material according to claim 6, wherein the ferrous source is at least one selected from ferrous sulfate, ferrous chloride, and ferrous acetate;
the oxalate ion source comprises at least one of oxalic acid, ammonium oxalate, and sodium oxalate;
the borate ion source comprises at least one of boric acid, ammonium borate, and sodium borate;
the first regulator comprises at least one of ammonium bicarbonate and sodium bicarbonate;
the first phosphorus source is at least one selected from phosphoric acid, diammonium hydrogen phosphate, and ammonium dihydrogen phosphate;
the first lithium source is at least one selected from lithium oxalate and lithium acetate; the second regulator comprises at least one of polyethylene glycol, polyvinyl alcohol, polyvinylpyrrolidone, and a polycarboxylic acid compound;
the ferric source comprises ferric phosphate;
the second phosphorus source comprises ferric phosphate;
the second lithium source comprises lithium carbonate; and
the carbon source is at least one selected from glucose, sucrose, starch, and cellulose.

8. The method for preparing the lithium iron phosphate material according to any one of claims 4, 5 and 7, wherein a step of mixing and then calcining the first dried material and the second dried material to obtain the lithium iron phosphate material comprises:
mixing and then pulverizing the first dried material and the second dried material to obtain a pulverized material; and
in a first protective atmosphere, subjecting the pulverized material to treatments at a second temperature for a second treatment time and then at a third temperature for a third treatment time, to obtain the lithium iron phosphate material;
wherein a particle size D50 of the first dried material is in a range from 2 µm to 5 µm, a particle size D50 of the second dried material is in a range from 5 µm to 15 µm, a particle size D50 of the pulverized material is in a range from 0.5 µm to 1 µm, the second temperature is in a range from 350°C to 450°C, the second treatment time is in a range from 2 h to 3 h, the third temperature is in a range from 600°C to 700°C, and the third treatment time is in a range from 3 h to 6 h.

9. A cathode plate, comprising a current collector and a cathode material disposed on at least one surface of the current collector in a thickness direction thereof, wherein the cathode material comprises the lithium iron phosphate material according to any one of claims 1 to 3 or the lithium iron phosphate material prepared by the method according to any one of claims 4 to 8.

10. A secondary battery, comprising the cathode plate according to claim 9, an anode plate, and a separator disposed between the cathode plate and the anode plate.
